# EUROPÄISCHE PATENTSCHRIFT

(11) **EP 3 579 726 B1**
(45) Veröffentlichungstag und Bekanntmachung des Hinweises auf die Patenterteilung: **16.09.2020**
(21) Anmeldenummer: 18702998.8
(22) Anmeldetag: 01.02.2018
(51) Int. Cl.: A47B 88/925, F16B 12/38

(54) **SCHUBKASTEN**
DRAWER
TIROIR COULISSANT

(30) Priorität: 10.02.2017 DE 102017102644
(43) Veröffentlichungstag der Anmeldung: 18.12.2019
(73) Patentinhaber: Paul Hettich GmbH & Co. KG, 32278 Kirchlengern (DE)
(72) Erfinder: RÜTER, Stefan, 32549 Bad Oeynhausen (DE); HEIMANN, Christian, 32257 Bünde (DE); SMOLLICH, Anne, 33790 Halle (DE)
(74) Vertreter: Dantz, Jan Henning
(86) Internationale Anmeldenummer: PCT/EP2018/052569
(87) Internationale Veröffentlichungsnummer: WO 2018/146001

(56) Entgegenhaltungen:
- WO-A1-2012/055158
- WO-A1-2012/145768
- WO-A1-2017/001620
- DE-U1-202013 011 425

## Beschreibung

Die vorliegende Erfindung betrifft einen Schubkasten, insbesondere für Möbel, nach dem Oberbegriff des Anspruches 1.

Die EP 2 398 350 B1 offenbart eine Eckverbindung für einen Schubkasten, bei dem eine Rückwand mit einer Seitenwand eines Schubkastens verbunden wird. Hierfür ist ein Verbinder vorgesehen, in den ein Halteelement eingesteckt ist, mittels dem eine erste Verbindung zwischen einem Wandelement und dem Verbinder hergestellt wird, und das Halteelement zudem durch Ausbildung einer U-förmigen Klammer auf eine Stirnkante des zweiten Wandelementes aufgesteckt werden kann. Solche Steckverbindungen sind zwar leicht zu montieren, können aber schlecht bei Schubkästen eingesetzt werden, die Seitenzargen aufweisen, bei denen dünne Wandelemente einen Hohlraum umgeben.

In der WO 2012/145768 A1 ist ein Schienensystem für eine Seitenwand einer Schublade offenbart, bei der ein Frontaufsatz mit einer Einrichtung zur Befestigung einer Schubladenfrontblende versehen ist. Zudem ist an dem Frontaufsatz eine Innenwand verschweißt.

Es ist daher Aufgabe der vorliegenden Erfindung, einen Schubkasten bereitzustellen, der im Bereich der Seitenzarge und der Anbindung an die Rückwand eine gute Stabilität aufweist und zudem leicht herzustellen ist.

Diese Aufgabe wird mit einem Schubkasten mit den Merkmalen des Anspruches 1 gelöst.

Bei dem erfindungsgemäßen Schubkasten ist in jeder Seitenzarge eine untere Halteschiene vorgesehen, an der beispielsweise der Boden des Schubkastens fixiert ist, und eine obere Verstärkungsschiene angeordnet, an der über Befestigungsmittel die Rückwand festgelegt ist. Dadurch ergibt sich eine erhöhte Stabilität der Verbindung zwischen Frontblende und Rückwand, da die Frontblende und die Rückwand auch in einem oberen Bereich beabstandet vom Boden über die Verstärkungsschiene miteinander verbunden sind. Damit können auf die Frontblende übertragene Kräfte in Bewegungsrichtung des Schubkastens besser auf den gesamten Schubkasten übertragen werden. Die Befestigungsmittel können dabei durch mindestens ein zusätzliches Bauteil oder integral mit der Verstärkungsschiene ausgebildet sein.

Gemäß einer bevorzugten Ausgestaltung ist die obere Verstärkungsschiene mit Befestigungsmitteln in Längsrichtung der Seitenzarge länger ausgebildet als das innere Wandelement der Seitenzarge. Dadurch kann das Befestigungsmittel nach hinten überstehen, was ein einfaches Aufstecken der Rückwand ermöglicht. Hierfür können die oberen Befestigungsmittel endseitig mit Rastmitteln, beispielsweise Rasthaken, versehen sein, die in Rastelemente an der Rückwand verrastet werden. Die Rastmittel des Befestigungsmittels selbst können dabei integraler Bestandteil, insbesondere Ausnehmungen, der Verstärkungsschiene sein, um eine direkte Verbindung zwischen der Verstärkungsschiene und der Rückwand auszubilden. An der Rückwand können hierfür Öffnungen oder Aufnahmen ausgebildet sein, die vorzugsweise integral mit der Rückwand vorgesehen sind, um die Rastmittel an den Rastelementen zu fixieren.

Auf ähnliche Weise kann auch die untere Halteschiene mit Befestigungsmitteln an der Rückwand fixiert werden. Die untere Halteschiene kann mit den Befestigungsmitteln länger ausgebildet sein als das innere Wandelement der Seitenzarge, so dass die Befestigungsmittel nach hinten hervorstehen. Vorzugsweise sind die Befestigungsmittel an der unteren Halteschiene und die Befestigungsmittel an der oberen Verstärkungsschiene übereinander angeordnet. Die untere Halteschiene weist erfindungsgemäß Rastmittel auf, die an Rastelementen der Rückwand verrastet sind, insbesondere können Rasthaken vorgesehen sein, die in eine Rastaufnahme, wie eine Öffnung oder ein anderes Rastelement, an der Rückwand fixiert werden können.

In einer weiteren Ausgestaltung ist die Rückwand aus einem gebogenen Stahlblech herstellt, an dem integral Rastelemente zur Verbindung mit den Befestigungsmitteln ausgebildet sind. Die Rastelemente können beispielsweise als stegförmige Laschen mit einer Öffnung oder einer Aussparung ausgebildet sein. Auch andere Rastelemente, beispielsweise durch Umbiegen einer Kante oder Einbringen von Profilierungen, sind einsetzbar.

Bevorzugt ist das äußere Wandelement der Seitenzarge in Längsrichtung länger ausgebildet als das innere Wandelement und die obere Verstärkungsschiene mit Befestigungsmitteln und/ oder die untere Halteschiene mit Befestigungsmitteln, so dass diese die über das innere Wandelement überstehenden Befestigungsmittel zumindest einseitig seitlich verdeckt.

Für eine besonders stabile Fixierung der Seitenzarge kann die Frontblendenbefestigung ein Gehäuse oder Halter aufweisen, an dem die obere Verstärkungsschiene und die untere Halteschiene durch Schweißen oder Kleben fixiert sind.

Optional kann zur weiteren Verstärkung in einem mittleren Bereich der Seitenzarge in Längsrichtung gesehen ein Versteifungselement vorgesehen sein, das die obere Verstärkungsschiene mit der unteren Halteschiene verbindet, wobei das Versteifungselement beispielsweise stegförmig ausgebildet ist und mit den beiden Schienen verschweißt oder verklebt sein kann.

Für besonders hohe Schubkästen kann an der unteren Halteschiene ein Adapter vorgesehen sein, der zwei voneinander beabstandete Befestigungsmittel aufweist, die an Rastaufnahmen der Rückwand fixiert sind. Dadurch kann die Rückwand an drei Befestigungsmitteln statt zwei Befestigungsmitteln fixiert werden, wobei, je nach Höhe, auch mehr als drei Befestigungsmittel vorgesehen werden können.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines erfindungsgemäßen Schubkastens;
- Figur 2: eine perspektivische Explosionsdarstellung einer Seitenzarge des Schubkastens der Figur 1;
- Figur 3: eine Seitenansicht einer Seitenzarge des Schubkastens der Figur 1 mit einem abgenommenen Wandelement;
- Figur 4: eine perspektivische Ansicht des Eckbereiches des Schubkastens der Figur 1 im Bereich der Rückwand;
- Figur 5: eine Ansicht einer Seitenzarge eines modifizierten Schubkastens, und
- Figur 6: eine Ansicht einer Seitenzarge gemäß einem weiteren Ausführungsbeispiel.

Ein Schubkasten 1 umfasst einen Boden 2, eine Frontblende 3 und eine Rückwand 4 sowie zwei Seitenzargen 5. Die Seitenzargen 5 verbinden die Fronblende 3 mit der Rückwand 4.

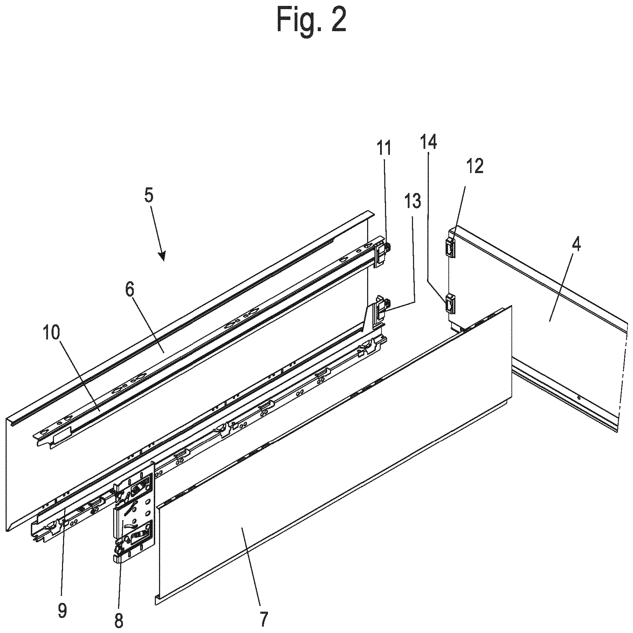

Eine Seitenzarge 5 ist in Figur 2 in einer Explosionsdarstellung gezeigt, wobei die gegenüberliegende Seitenzarge 5 spiegelbildlich aufgebaut sein kann. Die Seitenzarge 5 umfasst ein äußeres Wandelement 6 und ein inneres Wandelement 7, die im zusammengebauten Zustand einen Hohlraum umgeben. In diesem Hohlraum ist eine untere Halteschiene 9 vorgesehen, an der der Boden 2 fixiert ist. Hierfür kann die untere Halteschiene 9 eine U-förmige Aufnahme aufweisen, die einen Randbereich des meist aus einem Holzwerkstoff bestehenden Bodens 2 einfasst. Im vorderen Bereich ist an der unteren Halteschiene 9 eine Frontblendenbefestigung 8 vorgesehen, die die untere Halteschiene 9 mit einer oberen Verstärkungsschiene 10 verbindet. Die untere Halteschiene 9 und die obere Verstärkungsschiene 10 können stoffschlüssig oder kraftschlüssig mit einem Gehäuse oder Halter der Frontblendenbefestigung 8 verbunden sein, insbesondere durch Kleben oder Schweißen. Über die Frontblendenbefestigung 8 wird die Frontblende 3 am Schubkasten 1 fixiert.

Die obere Verstärkungsschiene 10 und die untere Halteschiene 9 sind rückseitig mit der Rückwand 4 verbunden. Hierfür sind an der oberen Verstärkungsschiene 10 Befestigungsmittel 11 und an der unteren Halteschiene 9 Befestigungsmittel 13 vorgesehen, die an integral mit der Rückwand 4 ausgebildeten Rastelementen 12 und 14 verrastet werden können.

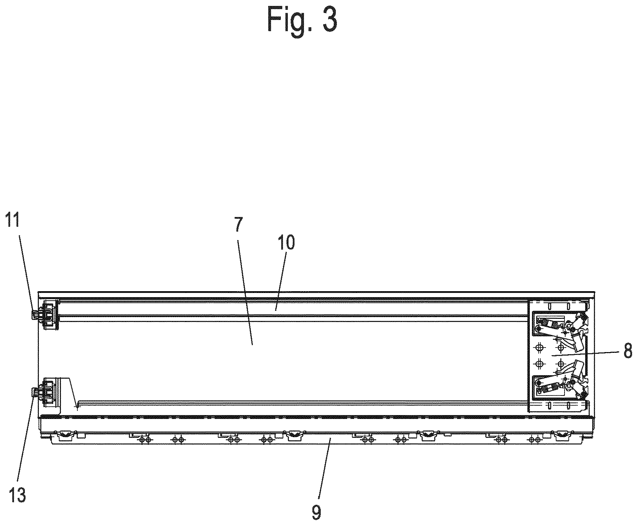

In Figur 3 ist die Seitenzarge mit dem inneren Wandelement 7 ohne das äußere Wandelement 6 dargestellt. Die obere Verstärkungsschiene 10 und die untere Halteschiene 9 mit den Befestigungsmitteln 11 und 13 überragen das innere Wandelement 7 rückseitig und können dort auf einfache Weise mit der Rückwand 4 verbunden werden, die in Längsrichtung der Halteschiene 9 und der Verstärkungsschiene 10 aufgesteckt werden kann.

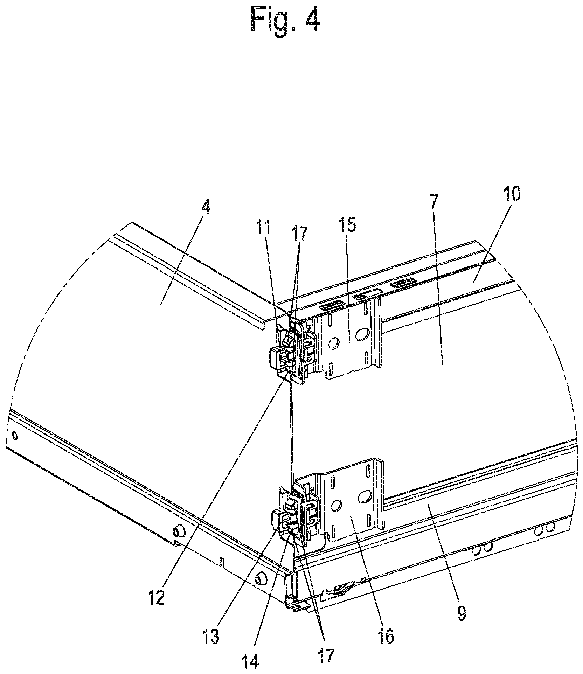

In Figur 4 ist der Eckbereich zwischen Rückwand 4 und Seitenzarge 5 im Detail gezeigt. Die Rückwand 4 ist aus einem gebogenen Stahlblech ausgebildet, das an gegenüberliegenden Stirnseiten eine obere Lasche mit einem Rastelement 12 und eine untere Lasche mit einem Rastelement 14 aufweist. Die Rastelemente 12 und 14 sind durch ausgestanzte Öffnungen ausgebildet, in die die Rastmittel 17 eingesteckt sind. An der oberen Verstärkungsschiene 10 ist ein Verbindungselement 15 aus Metall vorgesehen, das vorzugsweise an der Verstärkungsschiene 10 angeklebt oder angeschweißt ist. Auf ähnliche Weise ist an der unteren Halteschiene 9 ein Verbindungselement 16 aus Metall angebracht, beispielsweise durch Schweißen oder Kleben. An den Verbindungselementen 15 und 16 ist jeweils ein Kunststoffelement fixiert, an dem die Rastmittel 17 ausgebildet sind, insbesondere zwei Rasthaken, die nach dem Einstecken die Wände der Rastelemente 12 und 14 hintergreifen. Auch andere Rastmittel können zum Fixieren eingesetzt werden.

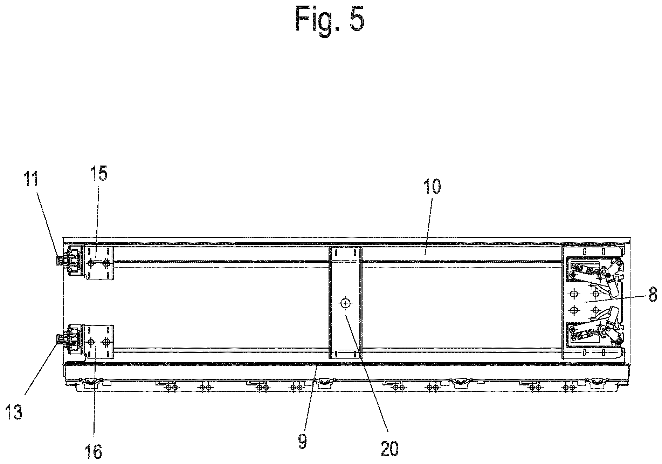

In Figur 5 ist ein weiteres Ausführungsbeispiel eines Schubkastens gezeigt, bei dem ergänzend zu der oberen Verstärkungsschiene 10 und der unteren Halteschiene 9 in einem mittleren Bereich der Seitenzarge 5 in Längsrichtung gesehen ein Versteifungselement 20 vorgesehen ist. Das Versteifungselement 20 verbindet die obere Verstärkungsschiene 10 mit der unteren Halteschiene 9 und ist mit dieser beispielsweise stoffschlüssig verbunden, insbesondere durch Kleben oder Schweißen. Dadurch wird eine Bewegung der unteren Halteschiene 9 relativ zu der oberen Verstärkungsschiene 10 in Längsrichtung verringert.

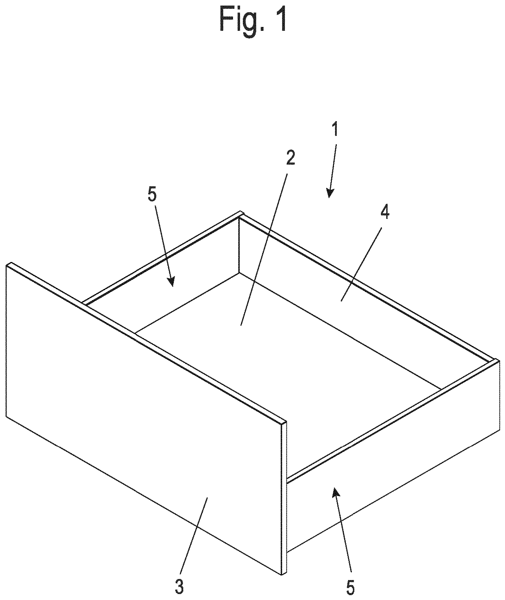

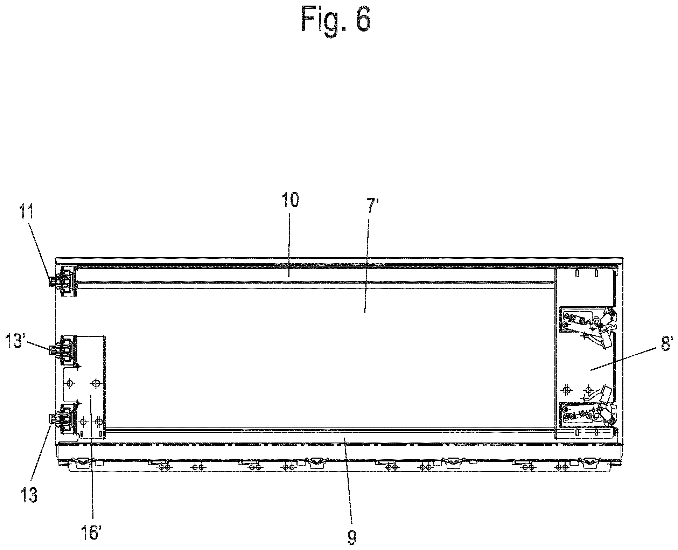

Bei dem in Figur 6 dargestellten modifizierten Ausführungsbeispiel ist eine Seitenzarge dargestellt, die eine größere Bauhöhe besitzt als der in Figur 1 gezeigte Schubkasten. Hierfür ist ein inneres Wandelement 7' vorgesehen, das höher ausgebildet ist als das Wandelement 7. Zudem ist an der unteren Halteschiene 9 rückseitig ein Verbindungselement 16' festgelegt, beispielsweise durch Schweißen oder Kleben, bei dem zwei voneinander beabstandete Befestigungsmittel 13 und 13' vorgesehen sind. Die obere Verstärkungsschiene 10 weist rückseitig ein weiteres Befestigungsmittel 11 auf, so dass bei dieser Seitenzarge drei Befestigungsmittel 11, 13' und 13 an drei Rastelementen der Rückwand 4 fixiert werden. Die Rastelemente können wie bei den vorangegangenen Ausführungsbeispielen ausgebildet sein.

Die obere Verstärkungsschiene 10 und die untere Halteschiene 9 können in den dargestellten Ausführungsbeispielen aus Metall hergestellt sein, insbesondere aus einem gebogenen Stahlblech, das eine größere Dicke aufweist als die Wandelemente 6 und 7 der Seitenzarge 5. Die Seitenzarge 5 ist in dem dargestellten Ausführungsbeispiel aus zwei Wandelementen 6 und 7 zusammengesetzt, wobei die obere Verstärkungsschiene 10 und die untere Halteschiene 9 zumindest mit einem der Wandelemente 6 und 7 verbunden sind, vorzugsweise stoffschlüssig verbunden sind. Es ist auch möglich, nur ein einziges Wandelement zur Ausbildung einer Seitenzarge mit Hohlraum vorzusehen, oder mehr als zwei Wandelemente miteinander zu einer hohlen Seitenzarge zu verbinden.

Zudem kann die Ausgestaltung der Rastmittel benachbart zu der Rückwand 4 verändert werden, beispielsweise können die Rasthaken auch an der Rückwand 4 vorgesehen sein und Rastaufnahmen an der oberen Verstärkungsschiene 10 und der unteren Halteschiene 9.

In den dargestellten Ausführungsbeispielen sind die Befestigungsmittel als zusätzliche Bauteile an der Verstärkungsschiene 10 fixiert. Es ist auch möglich, integral mit der Verstärkungsschiene 10 solche Befestigungsmittel auszubilden, beispielsweise in Form von Aussparungen, Aufnahmen, Raststegen oder Profilierungen.

### Bezugszeichenliste

- 1: Schubkasten
- 2: Boden
- 3: Frontblende
- 4: Rückwand
- 5: Seitenzarge
- 6: Wandelement
- 7,7': Wandelement
- 8,8': Frontblendenbefestigung
- 9: Halteschiene
- 10: Verstärkungsschiene
- 11: Befestigungsmittel
- 12: Rastelement
- 13,13': Befestigungsmittel
- 14: Rastelement
- 15: Verbindungselement
- 16,16': Verbindungselement
- 17: Rastmittel
- 20: Versteifungselement

## Patentansprüche

1. Schubkasten (1), insbesondere für Möbel, mit einem Boden (2), einer Frontblende (3), eine Rückwand (4) und zwei die Frontblende (2) und die Rückwand (4) verbindenden Seitenzargen (5), wobei jede Seitenzarge (5) ein inneres und ein äußeres Wandelement (6, 7), insbesondere aus Stahlblech aufweist, zwischen denen ein Hohlraum ausgebildet ist, in dem eine untere Halteschiene (9) und eine obere Verstärkungsschiene (10) angeordnet sind, die benachbart zu der Frontblende (3) mit einer Frontblendenbefestigung (8) verbunden sind, wobei die obere Verstärkungsschiene (10) über Befestigungsmittel (11) an der Rückwand (4) festgelegt ist, **dadurch gekennzeichnet, dass** die untere Halteschiene (9) endseitig mit Rastmitteln (17) versehen ist, die an einer Rastaufnahme (14) der Rückwand (4) verrastet sind.

2. Schubkasten nach Anspruch 1, **dadurch gekennzeichnet, dass** die obere Verstärkungsschiene (10) mit den Befestigungsmitteln (11) länger ausgebildet ist als das innere Wandelement (7) der Seitenzarge (5).

3. Schubkasten nach Anspruch 1 oder 2, **dadurch gekennzeichnet, dass** die Befestigungsmittel (11) endseitig mit Rastmitteln (17) versehen sind, die an einem Rastelement (12, 14) der Rückwand (4) verrastet sind.

4. Schubkasten nach Anspruch 3, **dadurch gekennzeichnet, dass** an der Rückwand (4) eine Öffnung oder eine Aufnahme ausgebildet ist, in die ein Rastmittel (17) des Befestigungsmittels (11) eingesteckt ist.

5. Schubkasten nach einem der vorhergehenden Ansprüche, **dadurch gekennzeichnet, dass** die untere Halteschiene (9) mit Befestigungsmitteln (13) länger ausgebildet ist als das innere Wandelement (7) der Seitenzarge (5).

6. Schubkasten nach einem der vorhergehenden Ansprüche, **dadurch gekennzeichnet, dass** an der Rückwand (4) eine Öffnung oder eine Aufnahme ausgebildet ist, in die ein Rastmittel (13) eingesteckt ist.

7. Schubkasten nach einem der vorhergehenden Ansprüche, **dadurch gekennzeichnet, dass** die Rückwand (4) aus einem gebogenen Stahlblech hergestellt ist, an dem integral Rastelemente (12, 14) zur Verbindung mit den Befestigungsmitteln (11, 13) der oberen Verstärkungsschiene (10) und der unteren Halteschiene (9) ausgebildet sind.

8. Schubkasten nach einem der vorhergehenden Ansprüche, **dadurch gekennzeichnet, dass** die Frontblendenbefestigung (8) ein Gehäuse oder Halter aufweist, an dem die obere Verstärkungsschiene (10) und die untere Halteschiene (9) durch Schweißen oder Kleben fixiert sind.

9. Schubkasten nach einem der vorhergehenden Ansprüche, **dadurch gekennzeichnet, dass** die untere Halteschiene (9) mit der oberen Verstärkungsschiene (10) in einem mittleren Bereich der Seitenzarge (5) in Längsrichtung gesehen über ein Versteifungselement (20) verbunden ist.

10. Schubkasten nach einem der vorhergehenden Ansprüche, **dadurch gekennzeichnet, dass** an der unteren Halteschiene (9) ein Verbindungselement 16'mit zwei voneinander beabstandeten Befestigungsmitteln (13, 13') festgelegt ist, die an Rastaufnahmen (14) der Rückwand (4) fixiert sind.

11. Schubkasten nach einem der vorhergehenden Ansprüche, **dadurch gekennzeichnet, dass** mindestens ein Wandelement (6, 7) an der oberen Verstärkungsschiene (10) und/oder der unteren Halteschiene (9) festgelegt ist.

## Claims

1. A drawer (1), in particular for a piece of furniture, having a bottom (2), a front panel (3), a rear wall (4), and two side frames (5) connecting the front panel (2) and the rear wall (4), wherein each side frame (5) has an inner and an outer wall element (6, 7), in particular made of steel plate, between which a cavity is formed, in which a lower retaining rail (9) and an upper reinforcing rail (10) are arranged, which are connected adjacent to the front panel (3) to a front panel fastener (8), wherein the upper reinforcing rail (10) is fixed via fastening means (11) on the rear wall (4), **characterized in that** lower retaining rail (9) is provided on the end with catch means (17), which are locked in a catch receptacle (14) of the rear wall (4).

2. The drawer according to Claim 1, **characterized in that** the upper reinforcing rail (10) having the fastening means (11) is formed longer than the inner wall element (7) of the side frame (5).

3. The drawer according to Claim 1 or 2, **characterized in that** the fastening means (11) are provided on the end with catch means (17), which are locked on a catch element (12, 14) of the rear wall (4).

4. The drawer according to Claim 3, **characterized in that** an opening or a receptacle, into which a catch means (17) of the fastening means (11) is plugged, is formed on the rear wall (4).

5. The drawer according to any one of the preceding claims, **characterized in that** the lower retaining rail (9) having fastening means (13) is formed longer than the inner wall element (7) of the side frame (5).

6. The drawer according to any one of the preceding claims, **characterized in that** an opening or a receptacle, into which a catch means (13) is plugged, is formed on the rear wall (4).

7. The drawer according to any one of the preceding claims, **characterized in that** the rear wall (4) is produced from a bent steel plate, on which integral catch elements (12, 14) are formed for the connection to the fastening means (11, 13) of the upper reinforcing rail (10) and the lower retaining rail (9).

8. The drawer according to any one of the preceding claims, **characterized in that** the front panel fastener (8) has a housing or holder, on which the upper reinforcing rail (10) and the lower retaining rail (9) are fixed by welding or adhesive bonding.

9. The drawer according to any one of the preceding claims, **characterized in that** the lower retaining rail (9) is connected to the upper reinforcing rail (10) via a stiffening element (20) in a middle region of the side frame (5) viewed in the longitudinal direction.

10. The drawer according to any one of the preceding claims, **characterized in that** a connecting element (16') having two fastening means (13, 13') spaced apart from one another, which are fixed on catch receptacles (14) of the rear wall (4), is secured on the lower retaining rail (9).

11. The drawer according to any one of the preceding claims, **characterized in that** at least one upper wall element (6, 7) is secured on the upper reinforcing rail (10) and/or the lower retaining rail (9).

## Revendications

1. Tiroir (1), notamment pour meuble comportant un fond (2), une façade (3), un dos (4) et deux châssis latéraux (5) reliant la façade (2) et le dos (4),
- chaque châssis latéral (5) comprenant un élément intérieur de paroi et un élément extérieur de paroi (6, 7) notamment en tôle d'acier, formant entre elles une cavité recevant un rail de maintien inférieur (9) et un rail de renforcement supérieur (10) qui, au voisinage de la façade (3) sont reliés à une fixation de façade (8),
- le rail de renforcement supérieur (10) étant fixé au dos (4) par des moyens de fixation (11),
tiroir **caractérisé en ce que**
le rail de maintien inférieur (9) est muni, côté extrémité, de moyens d'accrochage (17) accrochés dans un logement d'accrochage (14) du dos (4).

2. Tiroir selon la revendication 1,
**caractérisé en ce que**
le rail de renforcement supérieur (10) avec les moyens de fixation (11) est plus long que l'élément intérieur de paroi (7) du châssis latéral (5).

3. Tiroir selon la revendication 1 ou 2,
**caractérisé en ce que**
les moyens de fixation (11) sont munis, côté extrémité, de moyens d'accrochage (17) accrochés à un élément d'accrochage (12, 14) du dos (4).

4. Tiroir selon la revendication 3,
**caractérisé en ce que**
le dos (4) comporte une ouverture ou un logement dans lequel s'engage un moyen d'accrochage (17) du moyen de fixation (11).

5. Tiroir selon l'une des revendications précédentes,
**caractérisé en ce que**
le rail de maintien inférieur (9) avec les moyens de fixation (13) est plus long que l'élément intérieur de paroi (7) du châssis latéral (5).

6. Tiroir selon l'une des revendications précédentes,
**caractérisé en ce que**
le dos (4) comporte une ouverture ou un logement dans lequel s'engage un moyen d'accrochage (13).

7. Tiroir selon l'une des revendications précédentes,
**caractérisé en ce que**
le dos (4) est réalisé en tôle d'acier pliée dans laquelle les éléments d'accrochage (12, 14) sont reliés de manière intégrale, pour la liaison avec les moyens de fixation (11, 13) du rail de renforcement supérieur (10) et du rail de maintien inférieur (9).

8. Tiroir selon l'une des revendications précédentes,
**caractérisé en ce que**
la fixation d'extrémité (8) de la façade comprend un boîtier ou un support auquel le rail de renforcement supérieur (10) et le rail de maintien inférieur (9) sont fixés par soudage ou collage.

9. Tiroir selon l'une des revendications précédentes,
**caractérisé en ce que**
le rail de maintien inférieur (9) est relié au rail de renforcement supérieur (10) par un élément de rigidification (20) dans la zone médiane du châssis latéral (5) selon la direction longitudinale.

10. Tiroir selon l'une des revendications précédentes,
**caractérisé en ce qu'**
avec deux moyens de fixation (13, 13') écartés l'un de l'autre un élément de liaison (16') est fixé au rail de maintien inférieur (9), ces moyens de fixation étant fixés dans des logements d'accrochage (14) du dos (4).

11. Tiroir selon l'une des revendications précédentes,
**caractérisé en ce qu'**
au moins un élément de paroi (6, 7) est fixé au rail de renforcement supérieur (10) et/ou au rail de maintien inférieur (9).
